## Europäisches Patentamt

## European Patent Office

## Office européen des brevets

(19)

(11) Veröffentlichungsnummer: **0 120 299**
**B1**

---

(12) # EUROPÄISCHE PATENTSCHRIFT

(45) Veröffentlichungstag der Patentschrift:
**14.01.87**

(51) Int. Cl.⁴: **A 45 D 24/00, A 46 B 1/00**

(21) Anmeldenummer: **84101895.5**

(22) Anmeldetag: **23.02.84**

---

(54) **Haarpflegegerät mit Borsten oder Kammzähnen aus Kunststoff.**

---

(30) Priorität: **22.03.83 CH 1544/83**

(43) Veröffentlichungstag der Anmeldung:
**03.10.84 Patentblatt 84/40**

(45) Bekanntmachung des Hinweises auf die Patenterteilung:
**14.01.87 Patentblatt 87/3**

(84) Benannte Vertragsstaaten:
**BE DE FR GB IT NL SE**

(56) Entgegenhaltungen:
**DE-A-2 920 931**
**FR-A-935 816**
**US-A-1 435 911**
**US-A-1 533 330**
**US-A-2 651 810**

(73) Patentinhaber: **TRISA BÜRSTENFABRIK AG TRIENGEN, CH- 6234 Triengen (CH)**

(72) Erfinder: **Pfenniger, Emil, Weinberghalde, CH- 6234 Triengen (CH)**

(74) Vertreter: **Patentanwälte Schaad, Balass & Partner, Dufourstrasse 101 Postfach, CH- 8034 Zürich (CH)**

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die vorliegende Erfindung betrifft ein Haarpflegegerät mit Borsten oder Kammzähnen aus Kunststoff gemäss Oberbegriff des Anspruches 1 sowie Borsten- oder Kammzahnelemente zur Verwendung in einem derartigen Haarpflegegerät gemäss Oberbegriff des Anspruches 12.

Es sind Haarbürsten dieser Art bekannt, bei denen die Enden der Kunststoffborsten verdickt sind (CH-PS 341 791 sowie GB-OS 2 000 439). Wie aus der erwähnten CH-PS 341 791 hervorgeht, können diese Verdickungen dadurch gebildet werden, dass die Borstenenden durch Hitzeeinwirkung zum Schmelzen gebracht werden. Die mit den Borsten einstückig ausgebildeten Verdickungen bestehen somit aus demselben Werkstoff wie die Borsten selbst. Die Möglichkeiten, besondere optische Effekte oder besondere Eigenschaften der Borsten und der Verdickungen zu erzielen, sind somit sehr beschränkt. Im weiteren werden bei den bekannten Haarbürsten die Borsten einzeln oder allenfalls paarweise (GB-OS 2 000 439) zu Büscheln zusammengebracht und in einem Bürstenkörper befestigt. Die Herstellung solcher Bürsten ist somit recht aufwendig.

Daneben sind Haarbürsten bekannt, bei denen auf die Enden der durch Stahlstifte gebildeten Borsten Kopfteile aus Kunststoff aufgesetzt sind (GB-OS 2 054 368). Diese bekannte Lösung erlaubt zwar, Borsten und Kopfteile aus verschiedenartigen Materialien herzustellen, doch besteht die Gefahr des Abspringens der Kopfteile von den Borsten beim Gebrauch der Bürste.

Aus der DE-OS 29 20 931 (und der entsprechenden US-PS 4 244 076) ist es weiter bekannt, die reihenweise angeordneten Kunststoffborsten an ihrem einen Ende mittels eines Steges miteinander zu verbinden. Dabei werden die Borsten und der Steg gleichzeitig im selben Schritt im Spritzgussverfahren hergestellt. Die Borsten sind jedoch nicht mit einem besonderen Kopfteil versehen, so dass die Gefahr einer Verletzung der Kopfhaut durch die Borstenenden besteht.

Der vorliegenden Erfindung liegt nun die Aufgabe zugrunde, ein Haarpflegegerät der eingangs genannten Art zu schaffen, bei dem zwar die KoPfteile dauerhaft mit den Borsten bzw. Kammzähnen verbunden sind, das jedoch bei einer möglichst einfachen Herstellungsweise und ohne grossen Aufwand die Möglichkeit zur Erzielung verschiedener optischer Wirkungen und besonderer mechanischer Eigenschaften gibt.

Diese Aufgabe wird erfindungsgemäss durch die Merkmale des kennzeichnenden Teils des Anspruches 1 gelöst.

Die Trennung von Borsten bzw. Kammzähnen und Kopfteilen und Verankern der letzteren an den Borsten bzw. Kammzähnen oder am Grundkörper erlaubt einerseits, durch die Wahl von sich unterscheidenden, zum Beispiel verschiedenfarbigen und/oder verschiedenartigen Werkstoffen für Kopfteil und Verlängerungsteil einerseits und Borsten bzw. Kammzähnen sowie Grundkörper anderseits ohne grossen Aufwand verschiedene farbliche Effekte zu erzielen und gewisse gewünschte Eigenschaften, zum Beispiel ein gewisses Biegeverhalten der Borsten, zu erhalten und stellt andererseits sicher, dass die Kopfteile fest auf den Borsten bzw. Kammzähnen sitzen und sich beim Gebrauch des Haarpflegegerätes auch dann nicht ablösen, wenn die Borsten bzw. Kammzähne bei der Haarpflege erhöhten Temperaturen und/oder der Binwirkung von Haarpflegemitteln ausgesetzt sind.

Bevorzugte Weiterausbildungen des erfindungsgemässen Haarpflegegerätes sind Gegenstand der abhängigen Ansprüche 2 - 11.

Die Borsten- oder Kammzahnelemente zur Verwendung in einem erfindungsgemässen Haarpflegegerät zeichnen sich durch die Merkmale des kennzeichnenden Teils des Anspruches 12 aus.

Im folgenden wird anhand der Zeichnung ein Ausführungsbeispiel des Erfindungsgegenstandes näher erläutert. Es zeigt rein schematisch:

Fig. 1 einen Teil eines Borstenelementes für ein Haarpflegegerät im Längsschnitt entlang der Linie I-I in Fig. 2

Fig. 2 einen Schnitt entlang der Linie II-II in Fig. 1, und

Fig. 3 einen Schnitt entlang der Linie III-III in Fig. I.

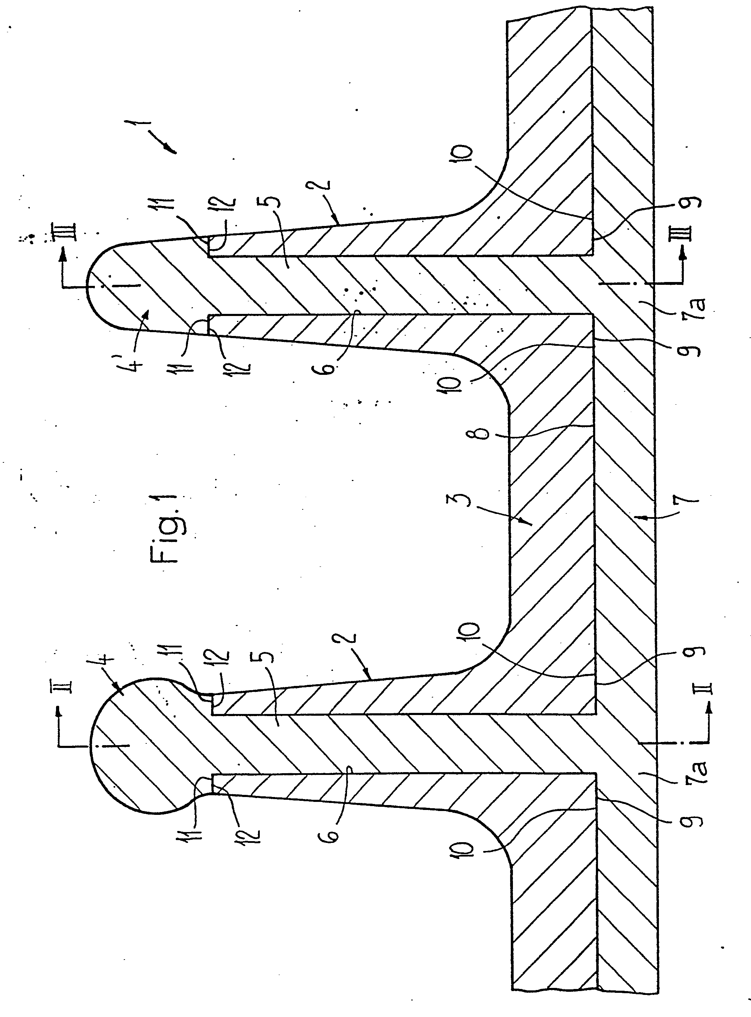

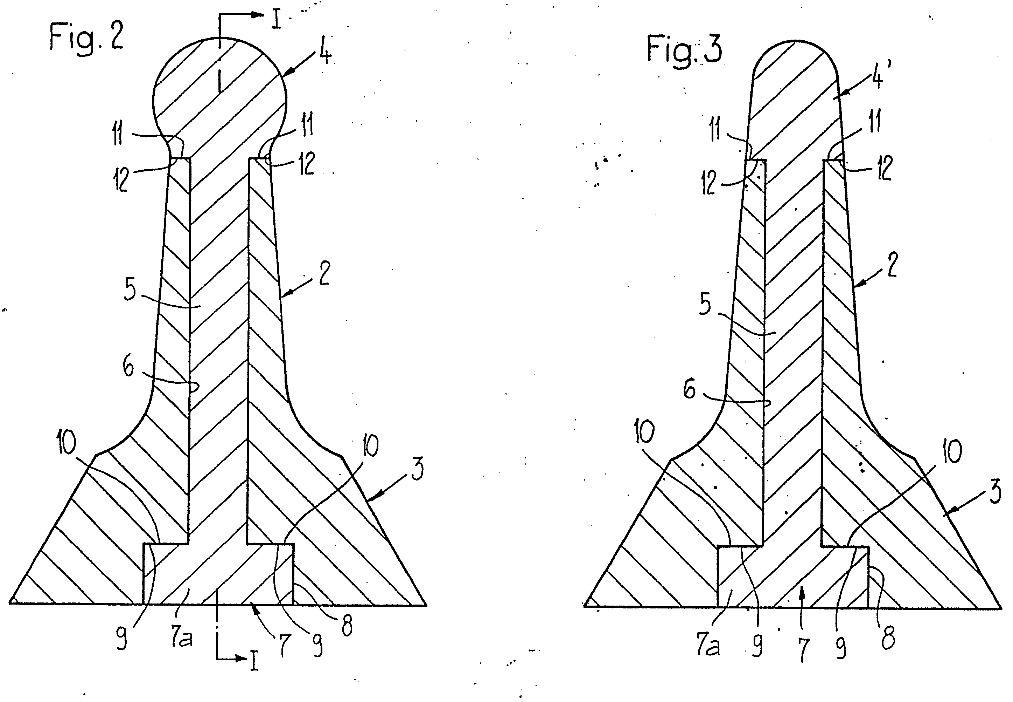

In der Figur I ist ein Teil eines Borstenelementes 1 für eine Haarbürste gezeigt, das mehrere in einer Reihe und in einem gegenseitigen Abstand angeordnete Borsten 2 aus Kunststoff aufweist. Diese Borsten 2 sind an ihrem einen Ende mittels eines leistenförmigen Grundkörpers 3 miteinander verbunden, der mit den Borsten 2 einstückig ausgebildet ist. An ihrem andern Ende tragen die Borsten 2 einen Kopfteil 4 bzw. 4'. Wie die Figuren zeigen, können diese Kopfteile verschiedene Formen haben. So hat beispielsweise der auf der linken Seite der Fig. 1 und in der Figur 2 gezeigte Kopfteil 4 eine kugelige Form mit einem Durchmesser, der etwas grösser ist als der Aussendurchmesser des obern Endes der die Form eines Kreiskegelstumpfes aufweisenden Borsten 2. Der Kopfteil 4' (rechte Seite der Figur 1 und Figur 3) ist demgegenüber von eher kegeliger, oben abgerundeter Form. Dabei verläuft die Mantelfläche des Kopfteiles 4' in Fortsetzung der Mantelfläche der Borsten 2. Ueblicherweise haben abweichend von Figur 1 die Kopfteile 4, 4' eines Borstenelementes 1 dieselbe Form.

Die ebenfalls aus Kunststoff bestehenden Kopfteile 4, 4' sind mit einem Verlängerungsteil 5 versehen, der mit dem zugeordneten Kopfteil 4, 4' einstückig ausgebildet ist. Dieser längliche, vorzugsweise zylindrische oder allenfalls prismatische Verlängerungsteil 5 verläuft im Innern eines Kanales 6, der sich in Längsrichtung der Borsten 2 bis zum Grundkörper 3 hin erstreckt. An ihren Enden verbreitern sich die Verlängerungsteile 5 zu Verankerungsteilen 7a, welche Teil eines Steges 7 bilden, der mit den Verlängerungsteilen 5 einstückig ausgebildet ist. Dieser Steg 7 verläuft in einer nach unten offenen Ausnehmung 8 im Grundkörper 3, die sich in Längsrichtung dieses Grundkörpers 3 erstreckt und einen rechteckförmigen Querschnitt aufweist. Diese Ausnehmung 8 steht mit den Kanälen 6 in den Borsten 2 in Verbindung.

Der nach allen Seiten über die Verlängerungsteile 5 überstehende Steg 7 weist im Bereich der Verlängerungsteile 5, das heisst im Bereich der Verankerungselemente 7a, Stützflächen 9 auf, die auf der Oberseite, das heisst an der den Kopfteilen 4, 4' zugekehrten Seite des Steges 7 angeordnet sind. Diese Stützflächen 9 liegen an Gegenflächen 10 an, die durch die an die Kanäle 6 anschliessenden Seiten der Ausnehmung 8 im Grundkörper 3 gebildet sind. Im Bereich des Ueberganges der Kopfteile 4, 4' in die Verlängerungsteile 5 geringeren Durchmessers sind die Kopfteile 4, 4' mit einer ringförmigen Sitzfläche 11 versehen, mit der sie auf einer ebenfalls ringförmigen Gegenfläche 12 am oberen Ende der Borsten 2 aufliegen. Durch das Abstützen der Kopfteile 4, 4' an den Gegenflächen 12 der Borsten 2 und der Verankerungsteile 7a bzw. des Steges 7 an den Gegenflächen 10 des Grundkörpers 3 wird verhindert, dass sich die Kopfteile 4, 4' infolge der beim Gebrauch der Haarbürste auftretenden Beanspruchungen von den Borsten 2 lösen können. Die Verlängerungsteile 5 wirken dabei ähnlich wie ein Zuganker, indem sie einerseits die Kopfteile 4, 4' und andererseits die Verankerungsteile 7a bzw. den Steg 7 zur festen Anlage an die Gegenflächen 12 bzw. 10 bringen.

Die Herstellung der gezeigten Borstenelemente 1 erfolgt vorzugsweise in einem zweistufigen Spritzgiessverfahren. Dàbei werden un einem ersten Schritt die Borsten 2 samt den Kanälen 6 und der mit diesen einstückige Grundkörper 3 samt Ausnehmung 8 hergestellt. In einem nachfolgenden zweiten Schritt werden dann die Kopfteile 4, 4', die Verlängerungsteile 5 sowie der Steg 7 hergestellt, wobei während dieses zweiten Schrittes der Werkstoff für den Steg 7, die Verlängerungsteile 5 und die Kopfteile 4, 4' in die Ausnehmungen 8 im Grundkörper 3 und die Kanäle 6 in den Borsten 2 eingespritzt wird. Die Herstellung der Borstenelemente 1 kann somit auf bekannte Art im Zweifarben-Spritzgiessverfahren hergestellt werden, wobei für den aus den Borsten 2 und dem Grundkörper 3 bestehenden Vorspritzling und die Kopfteile 4, 4', die Verlängerungsteile 5 und den Steg 7 nicht nur verschiedenfarbige, sondern auch verschiedenartige Werkstoffe verwendet werden können.

Dadurch, dass die Kopfteile 4, 4' (samt den Verlängerungsteilen 5 und dem Steg 7) und die Borsten 2 (samt dem Grundkörper 3) nicht aus einem Stück bestehen und damit auch in voneinder getrennten Verfahrensschritten hergestellt werden können, ist es durch Verwendung von verschiedenfarbigen Werkstoffen möglich, besondere Farbeffekte zu erzielen, da die Kopfteile 4, 4' eine andere Farbe aufweisen als die Borsten 2 und der Grundkörper 3. Es lassen sich, wie erwähnt, nicht nur verschiedenfarbige, sondern auch verschiedenartige Werkstoffe verwenden, die sich in ihren Eigenschaften unterscheiden. Durch geeignete Wahl der Werkstoffe lassen sich auch gewisse mechanische Eigenschaften der Borsten 2 und/oder der Kopfteile 4, 4' erzielen, zum Beispiel ein gewünschtes Biegeverhalten der Borsten 2 beim Gebrauch. Da die Verlängerungsteile 5 und die Borsten 2 nicht in der Art einer Verschweissung fest miteinander verbunden sind, sondern allenfalls leicht miteinander verklebt sind ist das Biegeverhalten der Borsten 2 anders, als wenn bei Fehlen der Verlängerungsteile 5 die Borsten 2 vollständig aus ein und demselben Werkstoff bestehen würden. Durch geeignete Wahl der Werkstoffeigenschaften für die Borsten 2 und die Verlängerungsteile 5 lassen sich die Biegeeigenschaften der Borsten 2 einstellen.

Falls gewünscht wird, dass sich die Borsten 2 während des Gebrauches elastisch ausbiegen können, so wird vorzugsweise als Werkstoff für beide Bestandteile ein Polyesterelastomer verwendet, beispielsweise "HYTREL".

Zur Bildung einer Haarbürste wird eine Anzahl von Borstenelementen 1 mit den Grundkörpern 3 in einen Halter eingesetzt, der von zylindrischer Form ist. Es versteht sich jedoch, dass dieser Halter auch eine andere geeignete Form aufweisen kann.

Im folgenden werden kurz noch einige der vielen möglichen Varianten erläutert.

Der Grundkörper 3 kann auch mit mehr als einer Reihe Borsten 2 versehen werden. Es ist jedoch nicht zwingend, die Borsten 2 in Reihen anzuordnen, obwohl das reihenweise Anordnen vor allem beim Spritzgiessen herstellungstechnische Vorteile bringt.

Der Grundkörper 3 kann auch anders als leistenförmig ausgebildet werden, zum Beispiel als Teil eines Hohlzylinders.. Die Verlängerungsteile 5 lassen sich anstatt mittels des Steges 7 auch auf andere geeignete Weise an den Borsten 2 bzw. im Grundkörper 3 verankern. Im weitern ist es denkbar, die Borsten 2 und den Grundkörper 3 nicht einstückig auszubilden, sondern in einem ersten Arbeitsgang die Borsten 2 mit den mittels der Verlängerungsteile 5 an den Borsten 2 verankerten Kopfteilen 4, 4' herzustellen und anschliessend diese Borsten 2 mit den Kopfteilen 4, 4' am Grundkörper 3 zu befestigen, der vorgängig in einem getrennten Arbeitsgang hergestellt worden ist. Diese Ausführungsform hat jedoch gegenüber dem vorstehend beschriebenen Ausführungsbeispiel den Nachteil einer aufwendigeren Herstellung.

Schliesslich sei noch darauf hingewiesen, dass bei einem Ersatz der Borsten 2 durch Kammzähne Kammzahnelemente erhalten werden können, die aufbaumässig den beschriebenen Borstenelementen 1 entsprechen und die auf dieselbe Weise hergestellt werden können wie letztere.

Die beschriebenen Borsten- und Kammzahnelemente lassen sich für die verschiedenartigsten Haarpflegegeräte verwenden, auch solche, bei denen eine Dampf- und/oder Wärmeerzeugung stattfinden kann.

**Patentansprüche**

1. Haarpflegegerät mit Borsten (2) oder Kammzähnen aus Kunststoff, die an ihrem einen Ende mit einem Grundkörper (3) verbunden und an ihrem andern Ende mit einem Kopfteilen (4, 4') versehen sind, dadurch gekennzeichnet, dass die gegenüber den Borsten (2) bzw. Kammsähnen separat ausgebildteten Kopfteile (4, 4') mittels Verlängerungsteilen (S), die im Innern der Borsten (2) bsw. Kammzähnen verlaufen, an der zugeordneten Borste (2) bzw. am zugeordneten Kammzahn oder am Grundkörper (3) verankert sind.

2. Haarpflegegerät nach Anspruch 1, dadurch gekennseichnet, dass die Kopfteile (4, 4') und die mit diesen vorsugsweise einstückigen Verlängerungsteile (5) aus einem Werkstoff bestehen, der sich in der Farbe und/oder seinen Eigenschaften vom Werkstoff der Borsten (2) bsw. Kammzähne unterscheidet.

3. Haarpflegegerät nach Anspruch 1 oder 2, dadurch gekennseichnet, dass der ebenfalls aus Kunststoff bestehende Grundkörper (3) mit den Borsten (2) bsw. Kammsähnen einstückig ausgebildet ist.

4. Haarpflegegerät nach einem der Ansprüche 1 - 3, dadurch gekennzeichnet, dass der Kopfteil (4, 4') mit einer Sitsfläche (11) auf einer Gegenfläche (12) an der zugeordneten Borste (2) bsw. am sugeordneten Kammsahn aufliegt.

5. Haarpflegegerät nach einem der Ansprüche 1 - 4, dadurch gekennzeichnet, dass sich der vorzugsweise zylindrische oder prismatische Verlängerungsteil (5) bis zum Grundkörper (3) erstreckt.

6. Haarpflegegerät nach Anspruch 5, dadurch gekennzeichnet, dass sich der Verlängerungsteil (5) an seinem dem Kopfteil (4, 4') gegenüberliegenden Ende zu einem Verankerungsteil (7a) verbreitert, der im Grundkörper (3) angeordnet ist.

7. Haarpflegegerät nach Anspruch 6, dadurch gekennzeichnet, dass sich der Verankerungsteil (7a) mit einer dem Kopfteil (4, 4') zugekehrten Stützfläche (9) auf einer Gegenfläche (10) im Grundkörper (3) abstützt.

8. Haarpflegegerät nach Anspruch 6 oder 7, dadurch gekennzeichnet, dass die Verankerungsteile (7a) einer Anzahl von Verlängerungsteilen (5) miteinander verbunden sind.

9. Haarpflegegerät nach Anspruch 8, dadurch gekennzeichnet, dass die Verankerungsteile (7a) durch einen die Verlängerungsteile (5) miteinander verbindenden Steg (7) gebildet sind.

10. Haarpflegegerät nach einem der Ansprüche 1 - 9, dadurch gekennzeichnet, dass die vorzugsweise in Reihen angeordneten Borsten bzw. Kammzähne mittels eines leistenförmigen Grundkörpers (3) miteinander verbunden sind.

11. Haarpflegegerät nach Anspruch 10, dadurch gekennzeichnet, dass die Borsten (2) bzw. Kammzähne mit ihrem Grundkörper (3) in einem vorzugsweise zylindrischen Träger gehalten sind.

12. Borsten- oder Kammzahnelement zur Verwendung in einem Haarpflegegerät mit einer Anzahl von Borsten (2) oder Kammzähnen aus Kunststoff, die an ihrem einen Ende mit einem gemeinsamen leistenförmigen Grundkörper (3) erbunden sind, dadurch gekennseichnet, dass die Borsten (2) bzw. Kammzähne an ihrem andern Ende einen gegenüber den Borsten bzw. den Kammzähnen separat ausgebildeten Kopfteil (4, 4') fragen, der mittels eines Verlängerungsteils (5), der im Innern der sugeordneten Borste (2) bzw. des zugeordneten Kammzahnes verläuft, an dieser Borste (2) bsw. diesem Kammzahn oder am Grundkörper (3) verankert ist.

13. Borsten- oder Kammzahnelement nach Anspruch 12, dadurch gekennzeichnet, dass die Kopfteile (4, 4') und die mit diesen vorzugsweise einstückigen Verlängerungsteile (S) aus einem Werkstoff bestehen, der sich in der Farbe und/oder in seinen Eigenschaften vom Werkstoff der Borsten (2) bsw. Kammsähne unterscheidet.

14. Borsten- oder Kammzahnelement nach Anspruch 12 oder 13, dadurch gekennzeichnet, dass sich die vorzugsweise zylindrischen oder prismatischen Verlängerungsteile (5) bis zum Grundkörper (3) erstrecken und sich zu einem im Grundkörper (3) angeordneten Verankerungsteil (7a) verbreitern.

15. Borsten- oder Kammzahnelement nach Anspruch 14, dadurch gekennzeichnet, dass die Enden der Verlängerungsteile (5) durch einen die Verankerungsteile (7a) bildenden Steg (7) miteinander verbunden sind.

16. Borsten- oder Kammzahnelement nach Anspruch 14 oder 15, dadurch gekennzeichnet, dass jeder Kopfteil (4, 4') mit einer Sitzfläche (11) auf einer Gegenflache (12) an der zugeordneten Borste (2) bzw. am zugeordneten Kammzahn aufliegt und sich jeder Verankerungsteil (7a) mit einer dem Kopfteil (4, 4') zugekehrten Stützfläche (9) auf einer Gegenfläche (10) im Grundkörper (3) abstützt.

**Claims**

1. An appliance for the care of the hair having bristles (2) or comb teeth of plastics material which are connected at their one end to a base member (3) and are provided, at their other end, with a head portion (4, 4'), characterised in that the head portions (4, 4') which are separately constructed in relation to the bristles (2) or comb teeth, are anchored on the associated bristle (2) or on the associated comb tooth or on the base member (3) by means of extension portions (5) which extend in the interior of the bristles(2) or comb teeth.

2. An appliance for the care of the hair as claimed in claim 1, characterised in that the head portions (4, 4') and the extension portions (5) which are preferably made integral with these, consist of a material which differs in colour and/or in its properties from the material cf the bristles (2) or comb teeth.

3. An appliance for the care of the hair as claimed in claim 1 or 2, characterised in that the base member (3), which likewise consists of plastics material, is made integral with the bristles (2) or comb teeth.

4. An appliance for the care of the hair as claimed in any one of the claims 1 to 3, characterised in that the head portion (4, 4') rests with a seating (11) on a mating surface (12) on the associated bristle (2) or on the associated comb tooth.

5. An appliance for the care of the hair as claimed in any one of the claims 1 to 4, characterised in that the extension portion (5), which is preferably cylindrical or prismatic, extends as far as the base member (3).

6. An appliance for the care of the hair as claimed in claim 5, characterised in that the extension portion (5) widens out at its end opposite to the head portion (4, 4') to form an anchoring portion (7a) which is disposed in the base member (3).

7. An appliance for the care of the hair as claimed in claim 6, characterised in that the anchoring portion (7a) is supported, by a supporting surface (9) facing the head portion (4, 4'), on a mating surface (10) in the base member (3).

8. An appliance for the care of the hair as claimed in claim 6 or 7, characterised in that the anchoring portions (7a) of a number of extension portions (5) are connected to one another.

9. An appliance for the care of the hair as claimed in claim 8, characterised in that the anchoring portions (7a) are formed by a web (7) connecting the extension portions (5) to one another.

10. An appliance for the care of the hair as claimed in any one of the claims 1 to 9, characterised in that the bristles or comb teeth, which are preferably disposed in rows, are connected to one another by means of a strip-shaped base member (3).

11. An appliance for the care of the hair as claimed in claim 10, characterised in that the bristles (2) or comb teeth, with their base member (3), are held in a carrier which is preferably cylindrical.

12. A bristle or comb-tooth element for use in an appliance for the care of the hair, having a plurality of bristles (2) or comb teeth of plastics material which are connected, at their one end, to a common strip-shaped base member (3), characterised in that the bristles (2) or comb teeth carry, at their other end, a head portion (4, 4') which is constructed separately from the bristles or the comb teeth and which is anchored, by means of an extension portion (5), which extends in the interior of the associated bristle (2) or the associated comb tooth, on this bristle (2) or this comb tooth or on the base member (3).

13. A bristle or comb-tooth element as claimed in claim 12, characterised in that the head portions (4, 4'), and the extension portions (5) which are preferably made integral with these, consist of a material which differs in colour and/or in its properties from the material of the bristles (2) or comb teeth.

14. A bristle or comb-tooth element as claimed in claim 12 or 13, characterised in that the extension portions (5), which are preferably cylindrical or prismatic, extend as far as the base member (3) and widen out to form an anchoring portion (7a) disposed in the base member (3).

15. A bristle or comb-tooth element as claimed in claim 14, characterised in that the ends of the extension portions (5) are connected to one another by a web (7) forming the anchoring portions (7a).

16. A bristle or comb-tooth element as claimed in claim 14 or 15, characterised in that each head portion (4, 4') rests with a seating (11) on a mating surface (12) on the associated bristle (2) or on the associated comb tooth and that each anchoring portion (7a) is supported on a mating surface (10) in the base member (3) by a supporting surface (9) facing the head portion (4, 4').

**Revendications**

1. Appareil de soins capillaires, avec des poils (2) ou des dents de peigne en matière plastique qui sont réunis à un corps de base (3) par une de leurs extrémités et à une partie formant tête (4, 4') par leur autre extrémité, caractérisé en ce que les parties formant tête (4, 4') réalisées séparément par rapport aux poils (2) ou aux dents de peigne sont ancrées au poil associé (2) ou à la dent de peigne associée ou au corps de base (3) au moyen de parties prolongatrices (5) qui s'étendent à l'intérieur des poils (2) ou des dents de peigne.

2. Appareil de soins capillaires selon la revendication 1, caractérisé en ce que les parties formant tête (4, 4') et les parties prolongatrices (5) realisées, de préférence, d'une seule pièce avec celles-ci sont constituées d'un matériau qui diffère du matériau des poils (2) ou des dents de peigne par sa couleur ou ses propriétés, ou les deux.

3. Appareil de soins capillaires selon la revendication 1 ou 2, caractérisé en ce que le corps de base (3) constitué également de matière plastique est réalisé d'une seule pièce avec les poils (2).

4. Appareil de soins capillaires selon l'une des revendications précédentes, caractérisé en ce que la partie formant tête (4, 4') repose par une surface d'appui (11) sur une contre-surface (12) du poil (2) associé ou de la dent de peigne associée.

5. Appareil de soins capillaires selon l'une des revendications précédentes, caractérisé en ce que la partie prolongatrice (5), de préférence cylindrique ou prismatique, s'étend jusqu'au corps de base (3).

6. Appareil de soins capillaires selon la revendication 5, caractérisé en ce que la partie prolongatrice (5), à son extrémité opposé à la partie formant tête (4, 4'), s'élargit pour former une partie d'ancrage (7a) qui est disposée dans le corps de base (3).

7. Appareil de soins capillaires selon la revendication 6, caractérisé en ce que la partie d'ancrage (7a) prend appui par une surface d'appui (9) tournée vers la partie formant tête (4, 4') sur une contre-surface (10) disposée dans le corps de base (3).

8. Appareil de soins capillaires selon la revendication 6 ou 7, caractérisé en ce que les parties d'ancrage (7a) d'un certain nombre de parties prolongatrices (5) sont réunies entre elles.

9. Appareil de soins capillaires selon la revendication 8, caractérisé en ce que les parties d'ancrage (7a) sont formées par une barrette (7) qui réunit entre elles les parties prolongatrices (5).

10. Appareil de soins capillaires selon l'une des revendications précédentes, caractérisé en ce que les poils (2) ou les dents de peigne disposés, de préférence, en rangées sont réunis entre eux ou entre elles, respectivement, au moyen d'un corps de base (3) en forme de barrette.

11. Appareil de soins capillaires selon la revendication 10, caractérisé en ce que les poils (2) ou les dents de peigne, avec leur corps de base (3), sont maintenus dans un support, de préférence cylindrique.

12. Elément de poil ou de dent de peigne pour utilisation dans un appareil de soins capillaires, avec un certain nombre de poils (2) ou de dents de peigne en matière plastique qui sont réunis par une de leurs extrémités à un corps de base (3) commun en forme de barrette, caractérisé en ce que les poils (2) ou les dents de peigne portent à leur autre extrémité une partie formant tête (4, 4') réalisée séparément par rapport aux poils (2) ou aux dents de peigne et qui, au moyen d'une partie prolongatrice (5), qui passe à l'intérieur du poil (2) associé ou de la dent de peigne associée, est réunie à ce poil (2) ou à cette dent de peigne ou au corps de base (3).

13. Elément de poil ou de dent de peigne selon la revendication 12, caractérisé en ce que les parties formant tête (4, 4') et les parties prolongatrices (5) réalisées, de préférence, d'une seule pièce avec celles-ci, sont constituées d'un matériau qui diffère du matériau des poils (2) ou des dents de peigne par sa couleur ou par ses propriétés, ou par les deux.

14. Elément de poil ou de dent de peigne selon la revendication 12 ou 13, caractérisé en ce que les parties prolongatrices (5), de préférence cylindriques ou prismatiques, s'étendent jusqu'au corps de base (3) et s'élargissent pour former une partie d'ancrage disposée dans ce corps.

15. Elément de poil ou de dent de peigne selon la revendication 14, caractérisé en ce que les extrémités des parties prolongatrices (5) sont réunies entre elles par une barrette (7) forment les parties d'ancrage (7a).

16. Elément de poil ou de dent de peigne selon la revendication 14 ou 15, caractérisé en ce que chaque partie formant tête (4, 4') repose par une surface d'appui (11) sur une contre-surface (12) du poil associé (2) ou de la dent de peigne associée; et que chaque partie d'ancrage (7a) prend appui par une surface d'appui (9) tournée vers la partie formant tête (4, 4'), sur une contre-surface (10) disposée dans le corps de base (3).

Fig.1

0 120 299

Fig. 2

Fig. 3

0 120 299